# EUROPEAN PATENT APPLICATION

(11) **EP 2 899 413 A1**
(43) Date of publication of application: **29.07.2015**
(21) Application number: 13839131.3
(22) Date of filing: 10.09.2013
(51) Int. Cl.: F16C 19/40, F03B 13/26, F03D 11/00, F16C 19/36, F16C 33/372, F16C 33/58, F16C 33/66, F16C 33/78, F16C 33/80

(54) **WIND/TIDAL POWER GENERATION BEARING**

(30) Priority: 19.09.2012 JP 2012205228
(71) Applicant: NTN Corporation, Osaka-shi, Osaka 550-0003 (JP)
(72) Inventor: SHIMIZU, Yasuhiro, Kuwana-shi Mie 511-8678 (JP)
(74) Representative: Behrmann, Niels
(86) International application number: PCT/JP2013/074326
(87) International publication number: WO 2014/045934

(57) **Abstract**

The wind/tidal power generation bearing for supporting a main shaft of a wind power generator or a main shaft of a tidal power generator includes a rolling bearing including an inner ring, an outer ring and a plurality of rollers disposed between the inner ring and the outer ring. The plurality of rollers are arranged in a circumferential direction such that axes of alternate rollers or alternate sets of a plurality of rollers intersect each other., thereby reducing a bearing width as compared to a double row tapered roller bearing or the like of the conventional art. Therefore, in the wind power generator or the tidal power generator, a space in an axial direction can be saved as compared to the conventional art.

## Description

### CROSS REFERENCE TO THE RELATED APPLICATION

This application is based on and claims Convention priority to Japanese patent application No. 2012-205228, filed September 19, 2012, the entire disclosure of which is herein incorporated by reference as a part of this application.

### BACKGROUND OF THE INVENTION

### (Field of the Invention)

The present invention relates to a wind/tidal power generation bearing which supports a main shaft of a wind power generator or a main shaft of a tidal power generator.

### (Description of Related Art)

Regarding a bearing for supporting a main shaft of a wind power generator, since an axial load acting on a windmill is applied to the bearing, as a system of supporting the main shaft, a single row cylindrical roller bearing or a self-aligning roller bearing may be used at the blade side, and an inward-facing type double row tapered roller bearing, capable of supporting loads in both directions, that is, a radial load and an axial load, can be applied, may be used at the power generator side. Instead of these bearings, in order to support the main shaft with one bearing at the center therebetween and ensure an equal distance between points of action, a steeply-inclined outward-facing type double row tapered roller bearing may be used which has a further large diameter and includes retainers each formed from a resin as a split type (Patent Document 1).

### [Related Art Document]

### [Patent Document]

[Patent Document 1] JP Laid-open Patent Publication No. 2003-194071
[Patent Document 2] JP Laid-open Patent Publication No. H09-126233
[Patent Document 3] JP Laid-open Patent Publication No. H08-061361

### SUMMARY OF THE INVENTION

The above main shaft supporting sysytem using a plurality of bearings in combination has a problem, for example, that the size of a nacelle is increased due to an increased axial length. In a wind power generator or a tidal power generator, various devices have to be installed within a casing in addition to a bearing. Thus, in order to ensure a space for these devices, it is desirable to achieve space saving for the bearing part, and it is also desirable to reduce the weight of the bearing part.

The steeply-inclined double row tapered roller bearing including split-type retainers can be made compact in axial dimension but has the following problems.
- Since the split-type retainers are used, a dedicated jig is needed at transport or in mounting and handling at the customer end, and an operation of mounting rollers and retainers for a single row of an inner ring is required at the customer end.
- Due to the steeply-inclined outward-facing type double row tapered roller bearing, the total width of the inner ring after assembling needs to be about twice as large as the outer ring width, so that space loss is great. Therefore, even when the main shaft can be supported by one bearing, it is difficult to reduce the size of the power generator.
- As for the outward-facing type double row tapered roller bearing, when the bearing is sealed, the case of mounting an assembly structure composed of a seal case and a seal body to the outer ring as a separate member is the mainstream. Thus, the entire width at the outer ring side is also increased, and the bearing cannot be made compact as a whole. In addition, in the case of the outward-facing type double row tapered roller bearing, leak of a lubricant tends to easily occur due to a so-called bearing pumping action that the lubricant moves from a small-diameter side portion of an inner ring raceway surface to a large-diameter side portion thereof during bearing operation.

Examples of bearings capable of supporting a radial load and an axial load include a cross roller bearing in which the cylindrical rollers are arranged in a circumferential direction such that the axes thereof alternately intersect each other (Patent Documents 2, 3). However, the cross roller bearing is used as a slewing bearing which is used for, for example, a so-called turntable of a construction machine, materials handling equipment, medical equipment, or the like, has such a shape that a bearing cross section is small with respect to the bearing width, and thus has not been used as a general bearing.

An object of the present invention is to provide a wind/tidal power generation bearing which allows a bearing width to be reduced and allows handling of the bearing to be made easy when the bearing is mounted to a shaft or a shaft box.

A wind/tidal power generation bearing in accordance with the present invention is a bearing for supporting a main shaft of a wind power generator or a main shaft of a tidal power generator, including a rolling bearing including an inner ring, an outer ring and a plurality of rollers disposed between the inner ring and the outer ring, in which the plurality of rollers are arranged in a circumferential direction such that axes of alternate rollers or alternate sets of a plurality of rollers intersect each other.

In this specification, the wind/tidal power generation bearing is in some cases referred to simply as "bearing".

According to this configuration, a so-called cross tapered bearing or cross roller bearing in which a plurality of rollers are aligned in a circumferential direction and axes of the rollers alternately intersect each other at intervals of one or a plurality of rollers is used as the wind/tidal power generation bearing. Since the cross tapered bearing or cross roller bearing has two inclined raceway surfaces which are inclined in directions opposite to each other, loads in both directions, that is, a radial load and an axial load, can be applied thereto. The cross tapered bearing or cross roller bearing can support a main shaft of a wind power generator or tidal power generator on which the loads in both directions act.

In the bearing, since the rollers of both left and right rows and the inner and outer rings are disposed on the same cross section, the bearing width can be reduced as compared to a double row tapered roller bearing or the like of the conventional art. Thus, in the wind power generator or the tidal power generator, it is possible to save a space in the axial direction as compared to the conventional art. In the wind power generator or the tidal power generator, for example, in addition to the bearing, various devices have to be provided within a casing in which the bearing is provided. However, since the bearing width can be reduced, space saving can be achieved in the casing. This makes it possible to ensure a space for installing a plurality of devices and also leads to weight reduction.

When the main shaft is supported by the cross tapered bearing or cross roller bearing, a pumping action to the bearing outside which is specific to an outward-facing type double row tapered roller bearing is unlikely to occur. Since the rollers having different rotation axes are arranged in the circumferential direction, an effect of confining the lubricant within the bearing by flow of the lubricant from the small-diameter side portion of the inner ring raceway surface to the large-diameter side portion thereof can occur, thereby preventing leak of the lubricant enclosed within the bearing.

Either one or both of a roller rolling surface in a cross section along a plane containing a bearing axis and raceway surfaces of the inner and outer rings in a cross section along the plane may be formed in a logarithmic crowning shape represented by a logarithmic curve. By using the logarithmic crowning shape, a load capacity equal to that of a double row tapered roller bearing or the like of the conventional art is ensured, and a yield strength to an edge surface pressure with respect to a moment load is also enhanced.

Either one or both of the inner and outer rings may include two segmented rings split in an axial direction and may also include a fastening structure to fasten those segmented rings to each other. The two segmented rings are fastened by the fastening structure and are prevented from being moved away from each other. Therefore, handling is enabled during transportation or at the customer end in a state where the two segmented rings are kept fastened. For example, in the case where the bearing is mounted to the wind power generator, the assembled bearing can be put into the casing and mounted thereto. In this case, man-hours can be reduced as compared to the case where components of the bearing are sequentially put into the casing and the bearing is mounted thereto.

The fastening structure may be a buried type in which the entire fastening structure is buried in the segmented ring. In this case, after the rollers are mounted to the inner and outer rings and the segmented rings are fastened and assembled, any portion of the fastening structure does not project from the segmented ring. Thus, the possibility is eliminated that a portion of the fastening structure interferes with another component. Therefore, it is unnecessary to detach the fastening structure even after the rollers and the segmented rings are assembled, it is possible to easily transport or handle the bearing, and it is possible to omit time and effort for detaching the fastening structure.

Spacer-type retainers may be provided between the rollers arranged in a circumferential direction. In this case, each spacer-type retainer is not restricted by a size in terms of production such as molding as compared to a split-type retainer of the conventional art, and desired productivity can be ensured. A retainer having a size smaller than the axial length and the diameter dimension of the roller is used as each spacer-type retainer.

Each retainer may be made of a steel, a copper alloy, or a nylon-based resin including engineering plastic.

A sealing device may be provided at a gap defined between the inner and outer rings. During bearing operation, a bearing pumping action that the lubricant moves from the small-diameter side portion of the inner ring raceway surface to the large-diameter side portion thereof is alleviated at the gap defined between the inner and outer rings. Since the sealing device is provided at the gap, leak of the lubricant can be effectively prevented.

An annular groove or a stepped portion in the form of a level difference becomes a recess and a projection between the inner and outer rings may be formed at an axial end of the inner and outer rings, and the sealing device may be mounted in the annular groove or the step. In this case, it is possible to easily mount the sealing device at the axial end of the inner and outer rings at which there is the annular groove or the step.

A lubricant reservoir portion configured to store a lubricant may be provided in the inner and outer rings and at a portion from the gap to the sealing device. Since the lubricant reservoir portion is provided, alleviation of an increase in internal pressure inward of the sealing device and a lubricant accumulation effect can be achieved, thereby further enhancing prevention of leak of the lubricant enclosed within the bearing.

A plurality of labyrinth structures may be provided at the gap defined between the inner and outer rings. In this case, an effect of accumulating, in the labyrinths, the lubricant flowing from the gap defined between the inner and outer rings toward the axially outer side is enhanced. Thus, it is possible to further enhance prevention of leak of the lubricant from the gap defined between the inner and outer rings.

Each roller may be a tapered roller or a cylindrical roller.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a cross-sectional view of a wind/tidal power generation bearing according to a first embodiment of the present invention;
Fig. 2 is an enlarged cross-sectional view of a principal part of the wind/tidal power generation bearing;
Fig. 3A is a front view of a retainer of the wind/tidal power generation bearing;
Fig. 3B is a front view of a retainer of the wind/tidal power generation bearing;
Fig. 4 is a cross-sectional view of a wind/tidal power generation bearing according to another embodiment of the present invention;
Fig. 5 is a cross-sectional view of a wind/tidal power generation bearing according to still another embodiment of the present invention;
Fig. 6 is an enlarged cross-sectional view of a principal part of a wind/tidal power generation bearing according to still another embodiment of the present invention;
Fig. 7 is a cross-sectional view of a wind/tidal power generation bearing according to still another embodiment of the present invention;
Fig. 8A is a cutaway side view of a wind power generator in which any of the wind/tidal power generation bearings is used; and
Fig. 8B is a cutaway side view of a wind power generator in which any of the wind/tidal power generation bearings is used.

### DESCRIPTION OF EMBODIMENTS

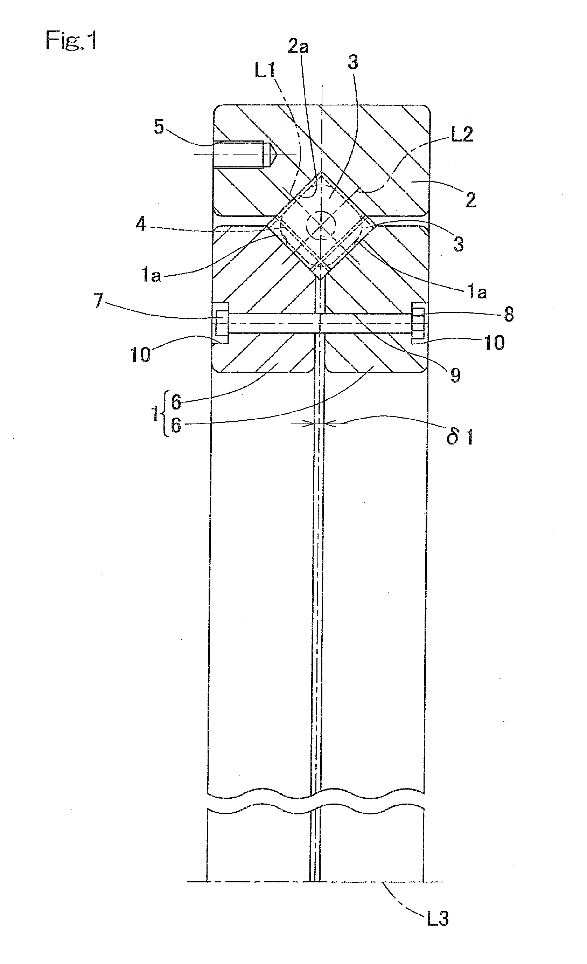

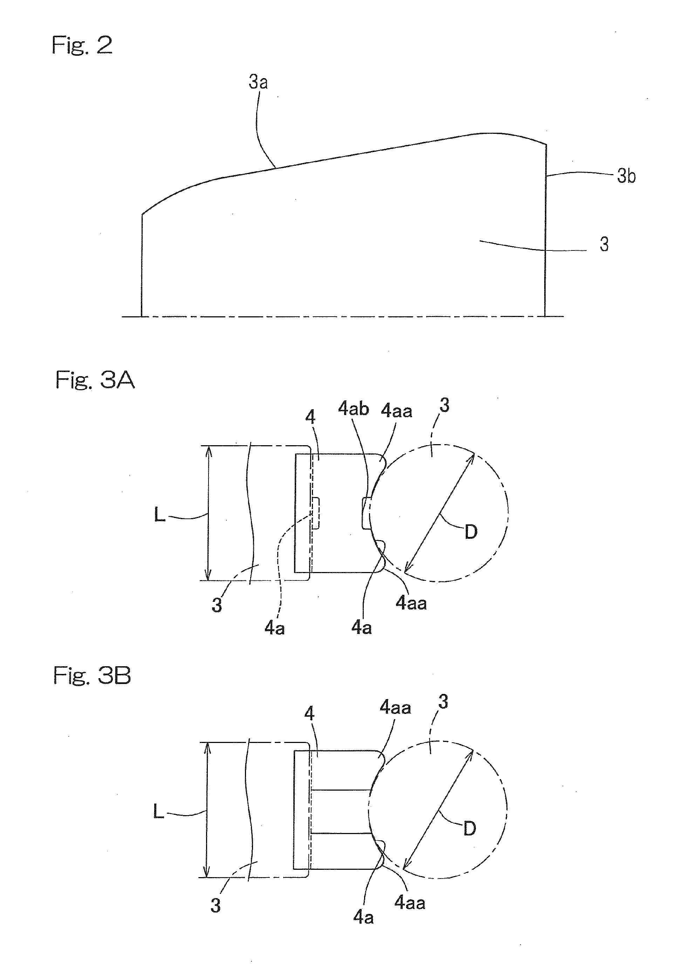

A wind/tidal power generation bearing according to a first embodiment of the present invention will be described with reference to Fig. 1 to Figs. 3A, 3B. The wind/tidal power generation bearing according to this embodiment is used as a rolling bearing for supporting a main shaft of a wind power generator or a main shaft of a tidal power generator.

As shown in Fig. 1, the bearing includes an inner ring 1, an outer ring 2, a plurality of rollers 3 which are rollably disposed between raceway surfaces 1a, 2a of these inner and outer rings 1, 2, and retainers 4 for retaining the respective rollers 3. In the example of Fig. 1, tapered rollers are used as the rollers 3. A bearing space between the inner and outer rings 1, 2 is filled with a lubricant composed of grease. The bearing is a so-called cross tapered bearing which is capable of supporting loads in both directions, that is, a radial load and an axial load, in which the plurality of rollers 3 are arranged in a circumferential direction such that axes L1, L2 of alternate rollers 3 or alternate sets of a plurality of rollers 3 intersect each other. In the bearing, in a state where a large-diameter end surface 3b (Fig. 2) of the roller 3 faces one of the outer ring raceway surfaces 2a and a small-diameter end surface of the roller 3 faces the inner ring raceway surface 1a opposed to the one of the outer ring raceway surfaces 2a, each of the rollers 3 revolves about the bearing axis thereof while rolling about the axis of the roller 3.

The outer ring raceway surfaces 2a, 2a are adjacent to each other in an axial direction, and a cross section obtained by cutting these outer ring raceway surfaces 2a, 2a along a plane containing a bearing axis L3 is formed in substantially a V shape. When the outer peripheral surface of the roller 3 is in rolling contact with either one of the outer ring raceway surfaces 2a and the inner ring raceway surface 1a opposed to this outer ring raceway surface 2a, for example, another roller 3 adjacent to this roller 3 in the circumferential direction is in rolling contact with the other outer ring raceway surface 2a adjacent to the one of the outer ring raceway surfaces 2a in the axial direction and the inner ring raceway surface 1a opposed to this outer ring raceway surface 2a. In addition, female threads 5 are formed in one end surface of the outer ring 2 at equal intervals in the circumferential direction. For example, an eyebolt or the like is screwed into each female thread 5 of the outer ring 2, and the outer ring 2 or the entire bearing can be transported by using a hoisting attachment.

The inner ring 1 includes two segmented rings 6, 6 that are split in the axial direction at an axially intermediate portion of the inner ring 1. These segmented rings 6, 6 are formed in a shape symmetric with respect to each other, and the inner ring 1 includes a fastening structure for fastening the segmented rings 6, 6 to each other. For the fastening structure, bolts 7 and nuts 8 may be used. After the segmented rings 6, 6 are fastened to each other and assembled by using the bolts 7 and the nuts 8, the bolts 7 and the nuts 8 do not project from the segmented rings 6, 6. In a state where the segmented rings 6, 6 are fastened to each other, the inner ring raceway surfaces 1a, 1a are adjacent to each other in the axial direction, and a cross section obtained by cutting these inner ring raceway surfaces 1a, 1a along the plane containing the bearing axis L3 is formed in substantially a V shape.

Through holes 9 are formed in the segmented rings 6, 6 at equal intervals in the circumferential direction so as to extend therethrough in the axial direction. A counterbore 10 is formed at a concentric position with respect to each through hole 9 in an outer end surface of each segmented ring 6. The counterbore 10 is formed in order that the bolts 7 and the nuts 8 do not project from the segmented rings 6, 6 when the bolts 7 and the nuts 8 are tightened by using a tool. Before the bearing is mounted to a shaft box and the main shaft which are not shown, precompression or end play (backlash) can be adjusted by previously increasing or decreasing a predetermined axial gap δ1 between the two segmented rings 6, 6 for adjustment. The tightened bolts 7 and nuts 8 are buried in the segmented rings 6, 6 and do not project from the segmented rings 6, 6, so that it is unnecessary to remove the bolts 7 and nuts 8.

As shown in Fig. 2, a roller rolling surface 3a in a cross section obtained by cutting the roller 3 along a plane containing the bearing axis has a logarithmic crowning shape represented by a logarithmic curve. In this example, only the roller rolling surface 3a has a logarithmic crowning shape, but the present invention is not limited to this example. For example, either one or both of each inner ring raceway surface 1a and each outer ring raceway surface 2a in a cross section obtained by cutting the inner and outer rings 1, 2 along the above plane may be formed in a logarithmic crowning shape represented by a logarithmic curve. The roller rolling surface 3a, each inner ring raceway surface 1a, and each outer ring raceway surface 2a may be formed in a logarithmic crowning shape.

The retainer 4 may be made of a steel, a copper alloy, or a nylon-based resin including engineering plastic. As shown in Fig. 3A, each retainer 4 is a spacer-type retainer provided between the rollers 3, 3 arranged in the circumferential direction, and has, at both retainer ends, recess-shaped circular arc surfaces 4a, 4a along the outer peripheral surfaces of the two rollers 3, 3 arranged in the circumferential direction, respectively. A retainer having a size smaller than the axial length L and the diameter dimension D of the roller 3 is used as each retainer 4. When the axes of the two rollers 3, 3 intersect each other, the virtual axes of the circular arc surfaces 4a, 4a at both ends of the retainer 4 between these rollers 3, 3 intersect each other. The radius of curvature of each circular arc surface 4a is set so as to be larger than the radius of curvature of the outer peripheral surface of the roller 3. When the axes of the two rollers 3, 3 arranged in the circumferential direction are parallel to each other, the virtual axes of the circular arc surfaces 4a, 4a at both ends of the retainer 4 between these rollers 3, 3 are also parallel to each other. In addition, a recess 4ab for storing the lubricant or a bore (Fig. 3B) is formed in a center portion of the circular arc surface 4a of the retainer 4, and both side edge portions 4aa of the circular arc surface 4a of the retainer 4 are subjected to, for example, round chamfering.

Advantageous effects will be described.

According to the wind/tidal power generation bearing described above, a so-called cross tapered bearing, in which the plurality of rollers 3 are arranged in the circumferential direction and the axes of alternate rollers 3 or alternate set of rollers 3 intersect each other, is used as the wind/tidal power generation bearing. Since the cross tapered bearing has two inclined raceway surfaces which are inclined in directions opposite to each other, the cross tapered bearing can bear loads in both directions, that is, a radial load and an axial load. The cross tapered bearing can support a main shaft of a wind power generator or tidal power generator on which the loads in both directions act.

In the bearing, since the rollers of both left and right rows and the inner and outer rings 1, 2 are disposed on the same cross section, the bearing width can be reduced as compared to a double row tapered roller bearing or the like of the conventional art. Thus, in the wind power generator or the tidal power generator, it is possible to save a space in the axial direction as compared to the conventional art. In the wind power generator or the tidal power generator, for example, in addition to the bearing, various devices have to be provided within a casing in which the bearing is provided. However, since the bearing width can be reduced, space saving can be achieved in the casing. This makes it possible to ensure a space for installing a plurality of devices.

When the main shaft is supported by the cross tapered bearing, a pumping action to the bearing outside which is specific to an outward-facing type double row tapered roller bearing is unlikely to occur. Since the rollers 3 having different rotation axes are arranged in the circumferential direction, an effect of confining the lubricant within the bearing by flow of the lubricant from the small-diameter side portion of each inner ring raceway surface 1a to the large-diameter side portion thereof can occur, thereby preventing leak of the lubricant enclosed within the bearing.

Since at least one of each roller rolling surface 3a, each inner ring raceway surface 1a, and each outer ring raceway surface 2a is formed in a logarithmic crowning shape, a load capacity equal to that of a double row tapered roller bearing or the like of the conventional art is ensured, and a yield strength to an edge surface pressure with respect to a moment load is also enhanced.

Since the inner ring 1 includes the two segmented rings 6, 6 split in the axial direction and also includes the fastening structure for fastening the segmented rings 6, 6 to each other, the two segmented rings 6, 6 are fastened by the fastening structure and are prevented from being moved away from each other. Therefore, handling is enabled during transportation or at the customer end in a state where the two segmented rings 6, 6 are kept fastened. For example, in the case where the bearing is mounted to the wind power generator, the assembled bearing can be put into the casing and mounted thereto. In this case, man-hours can be reduced as compared to the case where components of the bearing are sequentially put into the casing and the bearing is mounted thereto.

Each spacer-type retainer 4 is not restricted by a size in terms of production such as molding as compared to a split-type retainer of the conventional art, and desired productivity can be ensured. Therefore, it is possible to easily produce bearings having various sizes. The radius of curvature of the circular arc surface 4a of each retainer 4 is set so as to be larger than the radius of curvature of the outer peripheral surface of the roller 3, and both side edge portions 4aa of the circular arc surface 4a are subjected to round chamfering. Thus, stress concentration on both side edge portions 4aa of each retainer 4 can be alleviated. In addition to this, since the lubricant is retained in the gaps between both side edge portions 4aa of the circular arc surface 4a and the outer peripheral surface of the roller 3, abrasion of both side edge portions of each retainer 4 can be suppressed. Moreover, since the lubricant is stored in the recess 4ab of each retainer 4, it is possible to improve the lubricity between each retainer 4 and each roller 3 to improve the life of the bearing.

Other embodiments will be described.

In the following description of each embodiment, portions corresponding to the matters described in each preceding embodiment are designated by the same reference numerals, and the redundant description thereof is omitted. When only a part of a configuration is described, the remaining part of the configuration is the same as that of the previously described embodiment unless otherwise specified. The same advantageous effects are achieved by the same configuration. In addition to the combinations of portions described specifically in each embodiment, it is also possible to partially combine the embodiments unless any problem is particularly posed due to the combination.

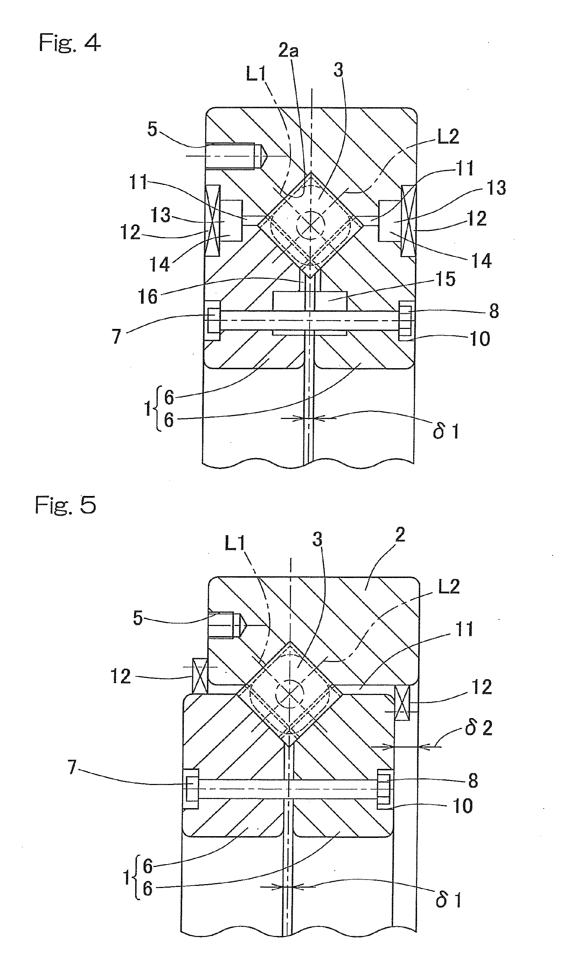

As shown in Fig. 4, sealing devices 12 may be provided at both axial ends of a gap 11 defined between the inner and outer rings 1, 2. Annular grooves 13 are provided at both axial ends of the inner and outer rings 1, 2, respectively, and the sealing devices 12 are mounted in the annular grooves 13, respectively. As each sealing device 12, for example, a contact-type seal made of an elastic element of nitrile, chloroprene, or the like may be used. A seal body is mounted to one of the annular grooves 13 on the inner and outer rings 1, 2, and a seal lip is in contact with the other of the annular grooves 13. In this example, the seal composed of an elastic element is used, but as each sealing device 12, for example, a non-contact type shield made of a steel sheet or the like may be used depending on a use and use conditions.

An annular lubricant reservoir portion 14 configured to store the lubricant is provided at a portion from the gap 11 to each sealing device 12 in a space between the inner and outer rings 1, 2. Lubricant reservoir portions 15 configured to store the lubricant are provided at a plurality of locations in the circumferential direction in the inner ring 1, and draw-in grooves 16 are provided in the inner ring 1 so as to provide communication between those lubricant reservoir portions 15 and the inner ring raceway surfaces 1a.

During bearing operation, a bearing pumping action that the lubricant moves from the small-diameter side portion of each inner ring raceway surface 1a to the large-diameter side portion thereof is alleviated at the gap 11 defined between the inner and outer rings 1, 2. In Fig. 4, since the sealing devices 12 are particularly provided at the gap 11, it is possible to effectively prevent leak of the lubricant within the bearing. Since the lubricant reservoir portion 14 for storing the lubricant is provided at the portion from the gap 11 to each sealing device 12 in the inner and outer rings 1, 2, application of a high internal pressure to the inner portion of each sealing device 12 can be alleviated. Thus, it is possible to further prevent leak of the lubricant enclosed within the bearing. In addition, the lubricant stored in each lubricant reservoir portion 15 of the inner ring 1 is appropriately supplied through the draw-in groove 16 to the inner ring raceway surfaces 1a, it is possible to omit time and effort for periodically supplying the lubricant into the bearing.

As shown in Fig. 5, a stepped portion δ 2 in the form of a level difference between the inner and outer rings 1, 2 may be provided at each axial end of the inner and outer rings 1, 2, and the sealing device 12 may be mounted to each stepped portion δ 2. In this case, since the sealing devices 12 can be mounted by using the stepped portions δ 2, annular grooves or the like for mounting the sealing devices 12 are unnecessary, and the manufacturing cost is reduced. In addition, the sealing devices 12 are able to prevent the lubricant from undesirably leaking from the gap 11 defined between the inner and outer rings 1, 2.

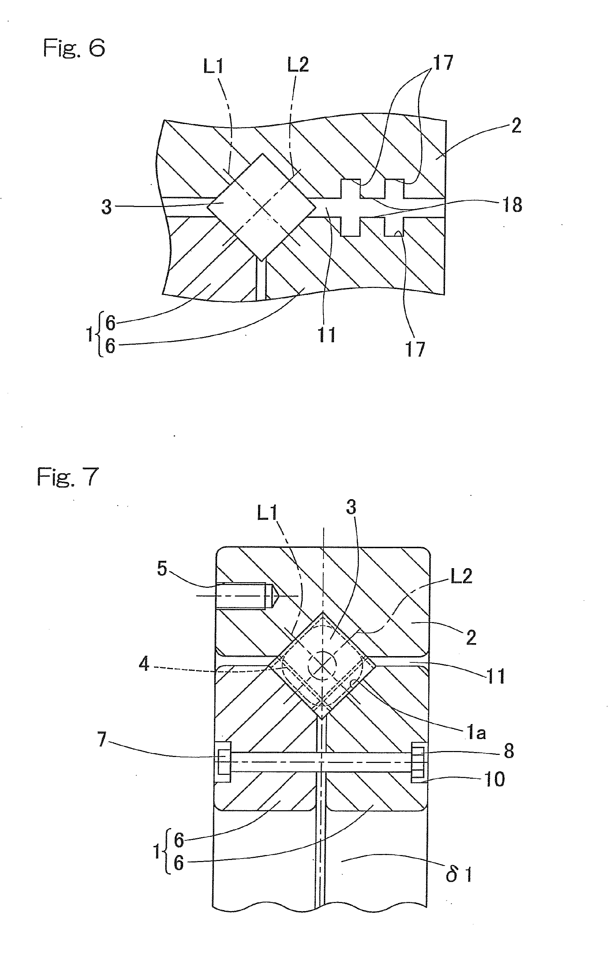

As shown in Fig. 6, a plurality of labyrinth structures may be provided at the gap 11 defined between the inner and outer rings 1, 2. In the labyrinth structures of this example, annular recesses 17 and annular projections 18 are formed on the outer ring inner peripheral surface and the inner ring outer peripheral surface along the axial direction. In this case, the lubricant flowing from the gap 11 defined between the inner and outer rings 1, 2 toward the outside of the bearing accumulates at the annular recesses 17 and the annular projections 18, thereby preventing leak of the lubricant.

As shown in Fig. 7, the bearing may be a so-called cross roller bearing in which a cylindrical roller is used as each roller 3. In this case as well, the bearing width can be reduced as compared to a double row tapered roller bearing or the like of the conventional art. Thus, in a wind power generator or a tidal power generator, it is possible to save a space in the axial direction as compared to the conventional art. In addition, a bearing pumping action is unlikely to occur, and leak of the lubricant enclosed within the bearing can be prevented.

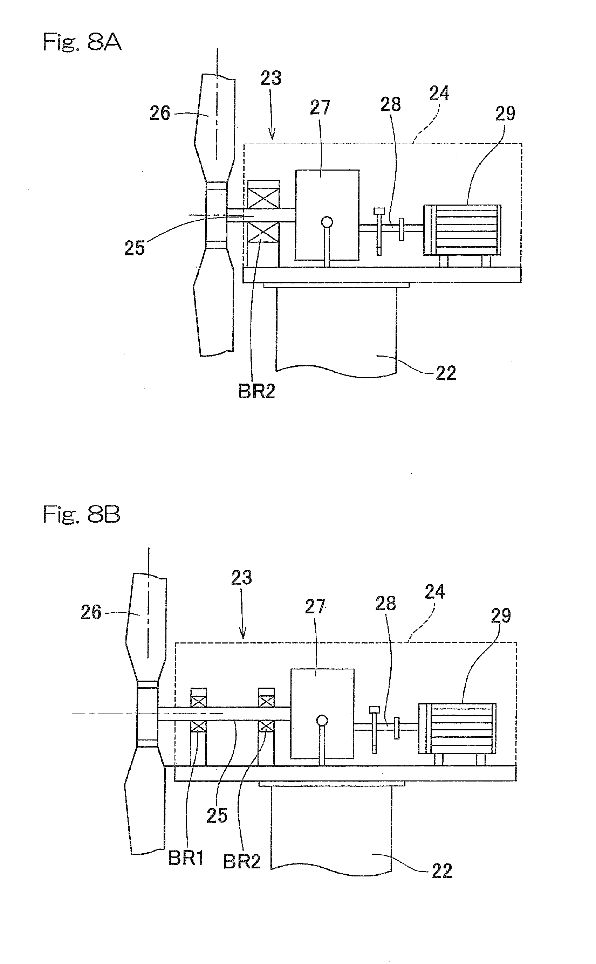

Fig. 8A is a cutaway side view of a wind power generator in which any of the bearings described above is used. In the wind power generator, a nacelle 23 is provided on a support base 22 so as to be horizontally turnable. Within a casing 24 of the nacelle 23, a main shaft 25 is rotatably supported by one bearing BR2. A blade 26 which is a swirler is mounted at an end of the main shaft 25 that projects outside of the casing 24. The other end of the main shaft 25 is connected to a speed-increasing gear 27, and an output shaft 28 of the speed-increasing gear 27 is connected to a rotor shaft of a generator 29.

In the case where any of the bearings described above is used as the bearing BR2 which supports the main shaft 25 of the wind power generator, it is possible to save a space in the axial direction within the casing 24 of the nacelle 23 as compared to the conventional art. In addition, leak of the lubricant enclosed within the bearing can be prevented, and thus it is possible to realize a wind power generator having excellent maintainability.

As shown in Fig. 8B, a structure may be provided in which the main shaft 25 is rotatably supported by bearings BR1, BR2. For example, the bearing BR1 which is composed of a single row cylindrical roller bearing or a self-aligning roller bearing is used at one end side of the main shaft 25 that is close to the blade 26, and the bearing BR2 which is composed of any of the bearings described above is used at the other end side of the main shaft 25.

Also, as for a main shaft of a tidal power generator having the same configuration, in the case where any of the bearings described above is used, it is possible to save a space in the axial direction as compared to the conventional art. In addition, since the bearing width can be reduced, a bearing pumping action is unlikely to occur, and leak of the lubricant enclosed within the bearing can be prevented. Therefore, it is possible to realize a tidal power generator having excellent maintainability.

In the embodiments described above, the inner ring 1 includes two segmented rings 6, 6 split in the axial direction, but the outer ring 2 or both the inner and outer rings 1, 2 may include two segmented rings split in the axial direction.

Although the preferred embodiments have been described above with reference to the drawings, those skilled in the art will readily conceive various changes and modifications within the framework of obviousness upon the reading of the specification herein presented of the present invention. Accordingly, such changes and modifications are to be construed as included in the scope of the present invention as delivered from the claims annexed hereto.

### [Reference Numerals]

1 ···Inner ring
2 ···· Outer ring
3 ···· Roller
3a ··· Roller rolling surface
4 ···· Retainer
6 ···· Segmented ring
12 ···Sealing device
13 ··· Annular groove
14 ··· Lubricant reservoir portion
25 ··· Main shaft
δ2 ···Step

## Claims

1. A wind/tidal power generation bearing for supporting a main shaft of a wind power generator or a main shaft of a tidal power generator, comprising:
a rolling bearing including an inner ring, an outer ring and a plurality of rollers disposed between the inner ring and the outer ring,
wherein the plurality of rollers are arranged in a circumferential direction such that axes of alternate rollers or alternate sets of a plurality of rollers intersect each other.

2. The wind/tidal power generation bearing as claimed in claim 1, wherein either one or both of a roller rolling surface in a cross section along a plane containing a bearing axis and raceway surfaces of the inner and outer rings in a cross section along the plane are formed in a logarithmic crowning shape represented by a logarithmic curve.

3. The wind/tidal power generation bearing as claimed in claim 1 or 2, wherein either one or both of the inner and outer rings include two segmented rings split in an axial direction and also include a fastening structure to fasten those segmented rings to each other.

4. The wind/tidal power generation bearing as claimed in any one of claims 1 to 3, wherein spacer-type retainers are provided between the rollers arranged in a circumferential direction.

5. The wind/tidal power generation bearing as claimed in claim 4, wherein each retainer is made of a steel, a copper alloy, or a nylon-based resin including engineering plastic.

6. The wind/tidal power generation bearing as claimed in any one of claims 1 to 5, wherein a sealing device is provided at a gap defined between the inner and outer rings.

7. The wind/tidal power generation bearing as claimed in claim 6, wherein an annular groove or a stepped portion in the form of a level difference between the inner and outer rings is formed at an axial end of the inner and outer rings, and the sealing device is mounted in the annular groove or the step.

8. The wind/tidal power generation bearing as claimed in claim 6 or 7, wherein a lubricant reservoir portion configured to store a lubricant is provided at a portion from the gap to the sealing device in a space between the inner and outer rings.

9. The wind/tidal power generation bearing as claimed in any one of claims 1 to 8, wherein a plurality of labyrinth structures are provided at the gap defined between the inner and outer rings.

10. The wind/tidal power generation bearing as claimed in any one of claims 1 to 9, wherein each roller is a tapered roller or a cylindrical roller.
